# DEMANDE DE BREVET EUROPEEN

(11) **EP 1 003 088 A1**
(43) Date de publication de la demande: **24.05.2000**
(21) Numéro de dépôt: 99420216.6
(22) Date de dépôt: 28.10.1999
(51) Int. Cl.: G05D 1/03, A47L 9/26

(54) **Aspirateur mobile autonome et son procédé de contrôle**

(30) Priorité: 17.11.1998 FR 9814589
(71) Demandeur: SEB S.A., 69130 Ecully (FR)
(72) Inventeur: Dancer, Paul, 42100 Saint Etienne (FR); Fabron, Jérôme, 27200 Vernon (FR)

(57) **Abrégé**

La présente invention est relative à un procédé de contrôle d'un robot autonome (1) comportant un bâti monté sur roulettes (2), dont au moins une est entraînée en rotation par un moteur électrique, l'alimentation dudit robot étant assurée par un câble électrique (14) relié à une prise électrique (16), caractérisé en ce qu'il comprend au moins les étapes:
- de déposer le câble électrique d'alimentation sur le trajet suivi par le robot au fur et à mesure de son avancée,
- de détecter par un dispositif de détection, les positions de portions de câbles électrique ainsi déposées sur le sol.

Avantageusement, le procédé comprend une étape de détection d'obstacles par des capteurs de type contact ou des capteurs de type proximité sans contact ou une combinaison des deux types.

L'invention concerne également un aspirateur mobile autonome comportant un tel procédé.

## Description

La présente invention concerne un aspirateur à poussières autonomes plus connu sous le terme de robot aspirant, et plus particulièrement la détection du trajet effectué par un tel robot lors de son fonctionnement.

La réalisation d'un robot aspirant, permettant de débarrasser toute pièce de la poussières accumulée sur le sol, se heurte à deux problèmes majeurs qui sont, dans un premier temps, la détection de son environnement : meubles, chaises, canapé, objets divers pouvant se trouver à même le sol, et dans un deuxième temps, la connaissance des surfaces déjà traitées.

L'emploi de nombreux capteurs ou combinaisons de capteurs tels que détection infrarouge, ultrasons, à l'aide d'algorithmes plus ou moins complexes permettent, dans une mesure variable, la progression du robot vis-à-vis de son environnement.

Dans le domaine de la connaissance du trajet déjà effectué, la situation est plus compliquée car elle nécessite d'une part une mémorisation de points de repère liés à la géométrie de la pièce et difficiles à généraliser pour tout type de pièces, et d'autre part un procédé cartographique permettant de pointer les zones déjà couvertes en tenant compte de la géométrie qu'il a fallu définir dans un premier temps, ce qui complique davantage le problème.

Le but de la présente invention est de remédier à ces problèmes de connaissance du trajet déjà effectué en proposant un procédé de contrôle original et simple à mettre en oeuvre, indépendant du système de reconnaissance de l'environnement du robot.

La présente invention est atteinte à l'aide d'un procédé de contrôle d'un robot autonome comportant un bâti monté sur roulettes, dont au moins une est entraînée en rotation par un moteur électrique, l'alimentation dudit robot étant assurée par un câble électrique relié à une prise électrique, caractérisé en ce qu'il comprend au moins les étapes :
- de déposer le câble électrique d'alimentation sur le trajet suivi par le robot au fur et à mesure de son avancée,
- de détecter par un dispositif de détection, les positions de portions de câbles électrique ainsi déposées sur le sol.

Ce procédé permet au robot de repérer le chemin qu'il a effectué afin de pouvoir revenir à son point de départ ou pour établir une cartographie des zones qu'il vient de parcourir. Ce procédé s'inscrit dans une problématique au départ liée au domaine des robots aspirants mais n'est pas limité à ce seul domaine.

En effet, il est envisageable d'utiliser le présent procédé de contrôle pour tout type de robot ayant besoin de se déplacer et de connaître le chemin parcouru et/ou de revenir à son point de départ.

La présente invention concerne plus particulièrement un procédé de contrôle d'un aspirateur mobile autonome comportant un bâti monté sur roulettes, dont au moins une est entraînée en rotation par un moteur électrique, un réservoir de stockage des déchets, un moteur équipé d'une turbine d'aspiration et de filtres ou dispositifs de séparation de poussière, l'alimentation dudit moteur étant assurée par un câble électrique, ainsi qu'un conduit d'aspiration terminé par un suceur ou une brosse en contact avec la surface à nettoyer, caractérisé en ce qu'il comprend au moins les étapes :
- de déposer le câble électrique d'alimentation sur le trajet suivi par le robot au fur et à mesure de son avancée,
- de détecter par un dispositif de détection, les positions de portions de câbles électrique ainsi déposées sur le sol.

Cette disposition permet, petit à petit, de construire une cartographie des zones traitées de façon simple, par localisation du câble électrique déroulé.

Préférentiellement, le procédé de contrôle comprend une étape de détection d'obstacles par des capteurs de type contact ou des capteurs de type proximité sans contact ou une combinaison des deux types. Ceci permet au robot de progresser en tenant compte de son environnement.

L'invention concerne également un robot autonome comportant un bâti monté sur roulettes, dont au moins une est entraînée en rotation par un moteur électrique, l'alimentation dudit robot étant assurée par un câble électrique relié à une prise électrique, caractérisé en ce qu'il comporte :
- des moyens pour déposer le câble électrique d'alimentation sur le trajet suivi par le robot au fur et à mesure de son avancée,
- des moyens pour détecter, par un dispositif de détection, les positions de portions de câble électrique ainsi déposées sur le sol.

Préférentiellement, le robot autonome comporte des moyens de détection d'obstacles par des capteurs de type contact ou des capteurs de type proximité sans contact ou une combinaison des deux types.

Avantageusement, les moyens pour détecter les positions de portions de câble électrique déposées sur le sol comprennent une caméra CCD associée à un logiciel de traitement d'images.

Avantageusement, les moyens pour déposer le câble électrique comprennent un moteur électrique associé à un capteur de tension, déroulant le câble électrique de telle sorte que sa tension soit maintenue inférieure à une valeur prédéterminée.

Cette particularité permet de définir précisément la trajectoire effectuée par le robot autonome sans risque que le câble ainsi déposé ne soit entraîné par le robot lors de son déplacement, la valeur prédéterminée correspondant au fait que le câble déposé sur le sol ne puisse être déplacé lorsque le robot progresse dans la pièce à nettoyer.

Avantageusement, le câble électrique comporte des zones de caractéristiques spécifiques aptes à être détectées de façon distincte par le capteur et/ou le dispositif de détection.

Ces caractéristiques selon une première variante, peuvent être des caractéristiques d'émission optique comprises dans le spectre de réception de la caméra CCD, afin d'identifier à coup sûr le câble et la longueur déroulée, notamment lorsque les zones d'émission sont régulièrement espacées.

Selon une deuxième variante de réalisation, ces caractéristiques sont des cerclages métalliques sur le câble, le dispositif de détection étant un dispositif sensible aux masses métalliques.

Selon une troisième variante de réalisation, le dispositif de détection est un dispositif électromagnétique sensible au passage du courant dans le câble.

Préférentiellement, le robot est un aspirateur mobile autonome, comportant un bâti monté sur roulettes, dont au moins une est entraînée en rotation par un moteur électrique, un réservoir de stockage des déchets, un moteur équipé d'une turbine d'aspiration et de filtres ou dispositifs de séparation de poussière, l'alimentation dudit moteur étant assurée par un câble électrique, un conduit d'aspiration terminé par un suceur ou une brosse en contact avec la surface à nettoyer.

La présente invention sera mieux comprise à l'aide de la description qui va suivre, en référence aux figures annexées, parmi lesquelles :
- la figure 1 est une vue schématique de profil, de l'aspirateur autonome muni du système de relevé de trajectoire,
- la figure 2 est une vue de dessus d'une pièce où se trouve l'aspirateur selon l'invention.

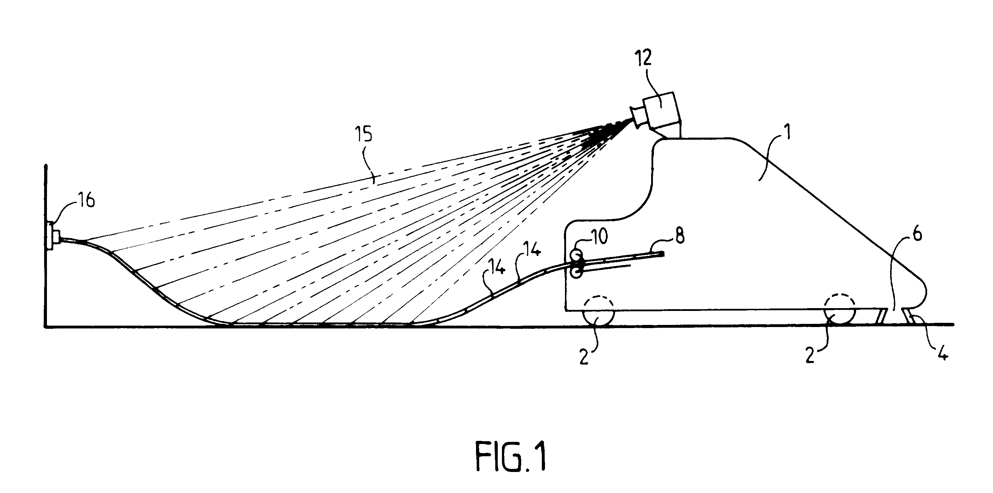

La figure 1 présente un aspirateur autonome 1 communément appelé robot aspirant comprenant un bloc d'aspiration ainsi qu'un réceptacle à déchets non représentés, un suceur d'aspiration 4 comportant un canal d'aspiration 6 ouvert vers le sol à nettoyer. Le terme suceur est ici employé dans un sens général, et correspond à la pièce mise en contact avec la surface à nettoyer afin de collecter la poussière et les déchets. Cette pièce peut être une brosse, un tube simple, un élément allongé présentant un ou plusieurs canaux d'écoulement et au moins un canal d'aspiration.

Le robot aspirant se déplace sur au moins trois roulettes 2, dont au moins une est entraînée en rotation autour de son axe à l'aide d'un moteur électrique non représenté, afin de faire progresser le robot dans la pièce à nettoyer. Le robot comporte également des moyens permettant d'agir sur au moins une roulette afin d'assurer son orientation selon une direction quelconque. Par exemple, une roulette unique avant peut être tournée à volonté sur la droite ou sur la gauche.

Il peut également être envisagé deux roues motrices, chaque roue étant équipée d'un moteur, ainsi qu'une troisième roue libre. Pour tourner, il suffit de commander une vitesse de rotation du moteur d'une des deux roues plus grande que l'autre.

Le robot comprend un câble 8 général d'alimentation électrique, susceptible d'être relié à une prise électrique 16.

Le câble électrique 8 est déposé par un dispositif tel un petit moteur électrique, non représenté. Dans l'exemple proposé, deux galets souples 10 en élastomère, localisés de part et d'autre du câble 8, tournent en sens inverse afin de dérouler ou d'enrouler le câble 8 à une vitesse au moins égale à la vitesse d'avance du robot.

Le câble peut être déposé à l'arrière ou, de préférence, sous le robot. Un dispositif de détection du câble comme par exemple une détection électromagnétique liée au passage du courant, ou bien une détection par un ou plusieurs capteurs optiques, peut également être mise en oeuvre, le câble se déroulant ou s'enroulant en passant à proximité du ou des dispositifs de détection.

Dans les deux cas, des repères 14 sont présents sur le câble, préférentiellement régulièrement espacés. Ces repères peuvent, soit être comptés afin de connaître la distance parcourue, soit, pour simplifier le logiciel de traitement, prévus pour donner une information précise de la distance depuis ou jusqu'à la prise, par un code-barre ou un autre codage à traits (cercles autour du câble, points, ...) ou par des cerclages métalliques qui peuvent être détectés par un dispositif sensible aux masses métalliques.

Une solution pour la détermination du trajet effectué est d'utiliser une caméra 12 de type CCD localisée sur le bâti du robot, orientée vers l'arrière du robot. Cette caméra, par son champ de vision 15, permet de visualiser le câble électrique déroulé et d'en déduire le trajet effectué par le robot à l'aide d'un logiciel de traitement d'images associé et des informations fournies par les repères 14 directement à la caméra ou par l'intermédiaire de capteurs spécifiques liés aux repères 14, comme précédemment décrits.

Afin d'affiner la précision du relevé de la trajectoire et de simplifier le logiciel de traitement, un filtre peut être installé devant la caméra, filtre dont la bande passante est adaptée aux caractéristiques d'émission électromagnétique du câble. Conjointement, les propriétés d'émission du câble sont adaptées au filtre utilisé.

Un autre moyen simple pour connaître la distance parcourue ou restant à parcourir, peut encore être de mesurer le nombre de tours ou de fraction de tour à l'aide d'un codeur angulaire par exemple, de l'enrouleur/dérouleur du câble.

Afin de ne pas modifier la position du câble lorsque le robot se déplace, un dispositif de détection de la tension du câble est utilisé. Ce dispositif peut être un dispositif à contact où le câble repose naturellement sur ce contact et s'en éloigne lorsqu'il est tendu, ou tout autre dispositif connu de contrôle de tension d'un câble. Une valeur de consigne est établie par un agencement mécanique ou un dispositif électronique. Lorsque cette valeur est dépassée, cela correspond à une mise en tension du câble déposé, ce qu'il faut éviter si l'on veut que le câble déposé reflète exactement le parcours effectué par le robot.

Un autre moyen pour vérifier la tension du câble, est d'utiliser un ou de préférence deux dispositifs à barrière optique, la tension du câble correspondant au franchissement d'une première barrière optique, la deuxième barrière étant franchie, à l'inverse, lorsque le câble se déroule inutilement.

Une variante consisterait à asservir l'enroulement/déroulement du câble à la rotation des roues.

Ainsi, le robot, tout en avançant en tenant compte de son environnement défini par des capteurs de type contact ou des capteurs de type proximité sans contact ou une combinaison des deux, disposés autour du robot, notamment sur le suceur, à l'avant du robot effectue les opérations suivantes :
- nettoyage des surfaces sur lesquelles il passe,
- dépose au fur et à mesure du câble d'alimentation électrique en veillant à ne pas le tendre
- relevé du trajet effectué.

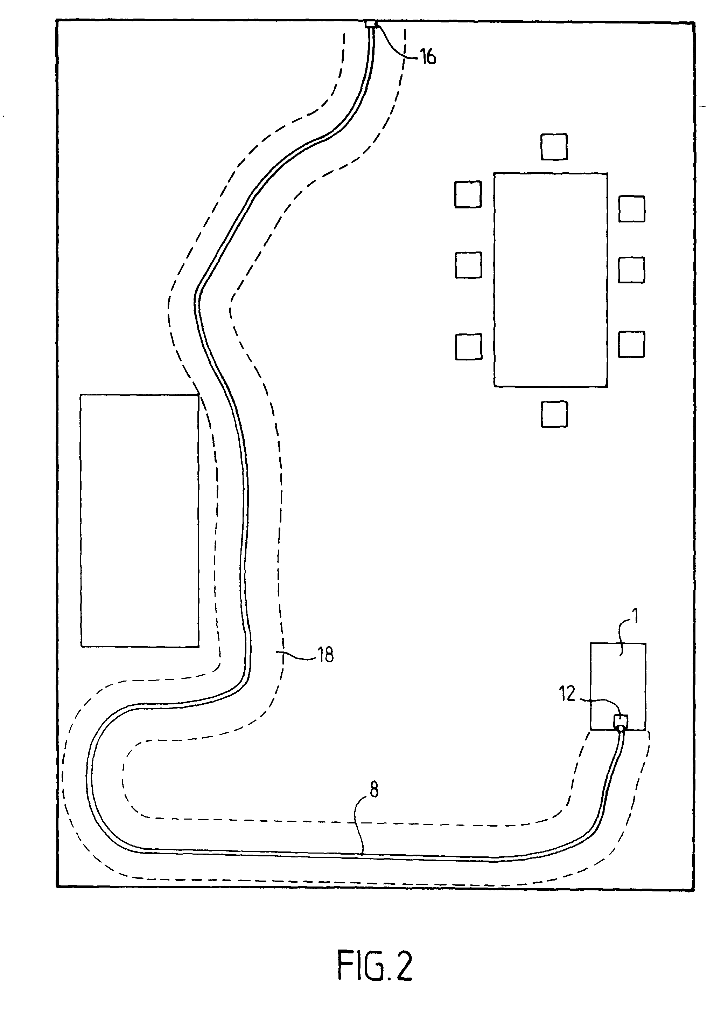

La figure 2 présente une pièce à nettoyer dans laquelle évolue le robot aspirant 1. On peut se rendre compte sur cette figure de l'importance du dépôt du câble qui doit rester lâche, c'est à dire exempt de toute traction du robot lors de son déplacement. Ceci est assuré en dévidant le câble au moins aussi vite que n'avance le robot.

Ainsi, une zone 18 couverte par ce déplacement du robot est mémorisée. Le robot, revenant à son point de départ choisira une direction pour se déplacer tenant compte des différentes zones 18 déjà couvertes.

Le système de relevé de trajectoire prévient lorsque tout le câble a été déroulé et que le robot ne peut plus avancer. Il utilise alors le système de détection du câble pour revenir vers son point de départ en ré-enroulant le câble grâce au moteur électrique.

Une variante, pour raccourcir la durée de nettoyage, peut être de déposer le câble de côté lorsque robot avance, son retour à la prise s'effectuant avec le câble de l'autre côté. Ainsi, la surface de nettoyage est différente à l'aller et au retour. Pour ce faire, des capteurs indiquant si le robot peut reculer sans problème, c'est-à-dire sans risque de heurter un obstacle sont nécessaires.

La gestion du déplacement du robot dans la pièce peut suivre plusieurs stratégies. Il peut être envisagé lors de la rencontre d'un obstacle, de revenir systématiquement à la prise d'alimentation électrique ou de nettoyer localement autour des différents obstacles.

Une carte de la zone accessible, c'est à dire la zone qui peut être couverte à partir de la prise d'alimentation électrique, est progressivement construite par le robot par un ou plusieurs algorithmes spécifiques. Cette carte est utilisée pour effectuer un nettoyage systématique de toutes les surfaces accessibles. Une fois que toutes les surfaces ont été nettoyées, le robot revient pour s'immobiliser et se mettre hors tension, près de la prise d'alimentation électrique.

Par ailleurs, l'algorithme de détection de trajectoire servant à définir la zone nettoyée, peut aussi en cas de besoin, prendre en compte un éventuel déplacement du câble par une personne, un animal ou toute autre cause, pour ramener de façon sûre, le robot à son point de départ.

La présente invention n'est pas limitée à un aspirateur de poussières, elle peut aussi concerner tout robot se déplaçant sur le sol, ayant besoin de connaître le chemin ou la surface qu'il a déjà parcouru et/ou ayant besoin de revenir à sa position de départ.

Ainsi, la présente invention peut s'appliquer à un laveur de moquette, à un appareil de lustrage ou tout autre appareil d'entretien du sol, comme un robot nettoyeur de piscine.

Dans le domaine de la maison, la présente invention peut être appliquée à un petit robot servant de desserte et suivant une personne afin de lui servir de table quelque soit l'endroit où se déplace la personne, le fil permettant de "renvoyer" la desserte à une place initialement donnée.

Il est aussi possible d'utiliser la présente invention sur une tondeuse électrique automatique de jardin, avec les précautions d'usage quant à la sécurité, ou sur un souffleur de feuilles.

Dans un tout autre domaine, la présente invention peut s'appliquer à un robot industriel destiné à la recherche de pièces dans un magasin, le câble électrique permettant au robot de revenir du magasin.

## Revendications

1. Procédé de contrôle d'un robot autonome comportant un bâti monté sur roulettes, dont au moins une est entraînée en rotation par un moteur électrique, l'alimentation dudit robot étant assurée par un câble électrique relié à une prise électrique, caractérisé en ce qu'il comprend au moins les étapes :
- de déposer le câble électrique d'alimentation sur le trajet suivi par le robot au fur et à mesure de son avancée,
- de détecter par un dispositif de détection, les positions de portions de câbles électrique ainsi déposées sur le sol.

2. Procédé de contrôle d'un aspirateur mobile autonome comportant un bâti monté sur roulettes, dont au moins une est entraînée en rotation par un moteur électrique, un réservoir de stockage des déchets, un moteur équipé d'une turbine d'aspiration et de filtres ou dispositifs de séparation de poussière, l'alimentation dudit moteur étant assurée par un câble électrique, ainsi qu'un conduit d'aspiration terminé par un suceur ou une brosse en contact avec la surface à nettoyer, caractérisé en ce qu'il comprend au moins les étapes :
- de déposer le câble électrique d'alimentation sur le trajet suivi par le robot au fur et à mesure de son avancée,
- de détecter par un dispositif de détection, les positions de portions de câbles électrique ainsi déposées sur le sol.

3. Procédé de contrôle selon l'une des revendication 1 ou 2, caractérisé en ce qu'il comprend une étape de détection d'obstacles par des capteurs de type contact ou des capteurs de type proximité sans contact ou une combinaison des deux types.

4. Robot autonome comportant un bâti monté sur roulettes, dont au moins une est entraînée en rotation par un moteur électrique, l'alimentation dudit robot étant assurée par un câble électrique relié à une prise électrique, caractérisé en ce qu'il comporte
- des moyens pour déposer le câble électrique d'alimentation sur le trajet suivi par le robot au fur et à mesure de son avancée,
- des moyens pour détecter, par un dispositif de détection, les positions de portions de câble électrique ainsi déposées sur le sol.

5. Robot autonome selon la revendication précédente, caractérisé en ce qu'il comporte des moyens de détection d'obstacles par des capteurs de type contact ou des capteurs de type proximité sans contact ou une combinaison des deux types.

6. Robot autonome selon l'une des revendications 4 ou 5, caractérisé en ce que les moyens pour détecter les positions de portions de câble électrique déposées sur le sol comprennent une caméra CCD associée à un logiciel de traitement d'images.

7. Robot autonome selon l'une des revendications 4 à 6, caractérisé en ce que les moyens pour déposer le câble électrique comprennent un moteur électrique associé à un capteur de tension, déroulant le câble électrique de telle sorte que sa tension soit maintenue inférieure à une valeur prédéterminée.

8. Robot autonome selon l'une des revendications 4 à 7, caractérisé en ce que le câble électrique comporte des zones de caractéristiques spécifiques aptes à être détectées de façon distincte par le capteur et/ou le dispositif de détection.

9. Robot autonome selon la revendication précédente, caractérisé en ce que les zones de caractéristique spécifique du câble sont constituées de cerclages métalliques, le dispositif de détection étant un dispositif sensible aux masses métalliques.

10. Robot selon l'une des revendications 4 à 9, caractérisé en ce que le dispositif de détection est un dispositif électromagnétique sensible au passage du courant dans le câble.

11. Robot selon l'une des revendications 4 à 10, caractérisé en ce que sa structure est celle d'un aspirateur, comportant un bâti monté sur roulettes, dont au moins une est entraînée en rotation par un moteur électrique, un réservoir de stockage des déchets, un moteur équipé d'une turbine d'aspiration et de filtres ou dispositifs de séparation de poussière, l'alimentation dudit moteur étant assurée par un câble électrique, un conduit d'aspiration terminé par un suceur ou une brosse en contact avec la surface à nettoyer.
